# EUROPEAN PATENT SPECIFICATION

(11) **EP 4 134 714 B1**
(45) Date of publication and mention of the grant of the patent: **25.03.2026**
(21) Application number: 21784010.7
(22) Date of filing: 02.04.2021
(51) Int. Cl.: G02B 5/30, G02C 7/12

(54) **OPTICAL FILM, AND OPTICAL LAMINATE AND EYEWEAR HAVING THIS**
OPTISCHER FILM UND OPTISCHES LAMINAT UND BRILLE DAMIT
FILM OPTIQUE, ET STRATIFIÉ OPTIQUE ET LUNETTES LE COMPRENANT

(30) Priority: 07.04.2020 JP 2020068728
(43) Date of publication of application: 15.02.2023
(73) Proprietor: Nippon Kayaku Kabushiki Kaisha, Tokyo 100-0005 (JP); MITSUBISHI GAS CHEMICAL COMPANY, INC., Chiyoda-ku Tokyo 100-8324 (JP); MGC Filsheet Co., Ltd., Tokorozawa-shi, Saitama 359-1164 (JP)
(72) Inventor: YAHAGI, Yoshiyuki, Tokyo 115-8588 (JP); HOSHINO, Saki, Tokyo 115-8588 (JP); AIKAWA, Yuki, Tokyo 115-8588 (JP); MURAI, Katsuyuki, Tokyo 125-8601 (JP); NAKAMURA, Kyousuke, Tokorozawa-shi, Saitama 359-1164 (JP); SAKAJIRI, Aya, Tokorozawa-shi, Saitama 359-1164 (JP); KANEDA, Masashi, Joetsu-shi, Niigata 943-0804 (JP)
(74) Representative: Hoffmann Eitle
(86) International application number: PCT/JP2021/014350
(87) International publication number: WO 2021/206024

(56) References cited:
- WO-A1-2016/002582
- WO-A1-2017/175829
- WO-A1-2017/175830
- WO-A1-2018/186369
- WO-A1-2019/116760
- JP-A- 2003 307 620
- JP-A- 2005 128 110
- JP-A- 2014 513 315
- US-A1- 2017 160 566
- US-A1- 2018 267 219
- US-A1- 2019 033 620

## Description

### Technical Field

The present invention relates to an optical film mainly used in an eyewear (such as sunglasses, goggles, and a helmet visor), and an optical laminate and an eyewear having the same.

### Background Art

An eyewear (such as sunglasses, goggles, and a visor) is used to reduce glare caused by reflected light from a water surface, a road surface, a snow surface, or the like. For example, lenses of sunglasses are colored by a pigment or the like so that quantity of light incident on eyes by absorption of the pigment is reduced, such that glare is reduced, and polarized sunglasses are particularly effective for reflected light from a water surface or a snow surface. Since the reflected light becomes polarized light, the polarized sunglasses are designed to effectively absorb light in a polarization direction, such that glare can be reduced and visibility can be improved without significantly reducing the quantity of light incident on eyes.

The polarized sunglasses usually have a configuration in which a polarizing element layer is interposed between plastic supports formed of polycarbonate or the like, and can be obtained by processing it into a desired shape and fitting it into a frame. The polarizing element layer is a film in which a so-called dichroic pigment such as a dichroic dye or a polyiodide-polyvinyl alcohol (PVA) complex is uniaxially oriented together with a polymer such as PVA, and a polarizing element layer with various colors can be obtained depending on a color of a pigment to be used. However, in the case of normal sunglasses, in order to impart polarizability to the entire visible light region, a gray color is often used.

In order to impart designability or further improve visibility in polarized sunglasses, a multilayer film may be deposited on surfaces thereof. By providing the multilayer film, reflected light on the surfaces of the sunglasses can be visually recognized in blue, green, and red metallic color tones by others, and for a wearer, a specific light is reflected, such that glare is reduced and visibility of scenery is further improved. It is beneficial for the wearer to provide a multilayer film in this manner. However, there are a problem in handling that sebum or the like adhering to the multilayer film is hard to remove, a problem in stability that the multilayer film is peeled off at a place such as sea where the polarized sunglasses are exposed to moisture or salt air, and a problem in manufacturing that it is difficult to uniformly deposit the multilayer film on a front surface portion and a curved surface portion when the multilayer film is deposited on a curved lens for an eyewear.

In order to solve the problems, a method of providing a multilayer film inside the support, that is, between the polarizing element layer and the support, is considered. However, since the multilayer film exhibits reflection performance due to a difference in refractive index between the respective layers, it is difficult to obtain reflection performance equivalent to that of the outer air interface. In addition, the multilayer film is formed of an inorganic substance, and thus, there is a problem in adhesion to the polarizing element layer formed of an organic substance.

On the other hand, as a method for imparting a metallic color tone with an organic substance without using a multilayer film, there is a method using a cholesteric liquid crystal layer as described in JP 2001-180200 A. Cholesteric liquid crystals are in a state in which liquid crystal molecules are helically oriented, and have a function of selectively reflecting a circularly polarized light component in the same direction as the helical direction in a specific wavelength region depending on a length of a helical pitch. An optical laminate using the cholesteric liquid crystal layer in which the helical orientation is fixed in a desired reflection wavelength region has a vivid color tone and can impart decorativeness.

The cholesteric liquid crystal can reflect circularly polarized light components in a specific wavelength region due to its nature. That is, only circularly polarized light is transmitted as transmitted light. Thus, in a case where the cholesteric liquid crystal is combined with the polarizing element layer, the polarizing element layer cannot sufficiently absorb transmitted light, such that light leaked from the polarizing element layer is increased, resulting in degradation of the original function of the polarized sunglasses.

As a technique for suppressing a decrease in degree of polarization of an eyewear such as polarized sunglasses having cholesteric liquid crystals, WO 2016/002582 A (Patent Literature 4) by the present inventors proposes a method for suppressing a decrease in degree of polarization by laminating a cholesteric liquid crystal layer R having a right-handed helical orientation and a cholesteric liquid crystal layer L having a left-handed helical orientation as cholesteric liquid crystal layers.

An eyewear provided with a multilayer film by vapor deposition or an eyewear using cholesteric liquid crystals described in WO 2016/002582 A is excellent in designability, polarization characteristics, and the like, and can exhibit an excellent effect mainly for sports applications and the like.

An optical film is also known from US 2019/033620 A1, US 2017/160566 A1, and US 2018/267219 A1.

### Summary of Invention

### Technical Problem

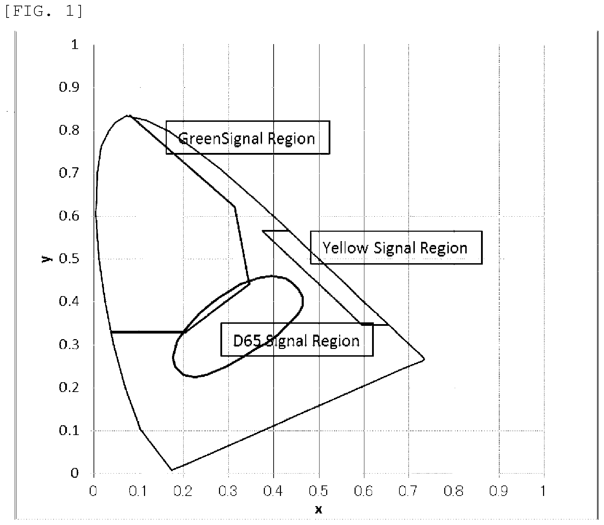

On the other hand, the eyewear described above often does not conform to the signal visibility standards (ISO 12312-1:2013, ANSI Z80.3:2010, AS/NZS 1067:2003, and the like) of various countries shown in Tables 1 to 3 and illustrated in Fig. 1, and thus cannot be used for driving a passenger car, and there has been a problem that use applications thereof are limited.

**[Table 1]**

| Table 1. Signal visibility standards of eyewear specified in ISO 12312-1:2013 | |
|---|---|
| Item | Standard |
| Luminous-D65,Tv | |
| Spectrum,T(475-650nm) | ≧0.20Tv |
| Incandescent Lights | |
| Red Signal Attenuation, Qred | ≧0.8 |
| Yellow Signal Attenuation, Qyellow | ≧0.6 |
| Green Signal Attenuation, Qgreen | ≧0.6 |
| Blue Signal Attenuation, Qblue | ≧0.6 |

**[Table 2]**

| Table 2. Signal visibility standards of eyewear specified in ANSI Z80.3:2010 | |
|---|---|
| Item | Standard |
| Luminous-C,Tv | |
| Spectrum,T(475-650nm) | ≧0.20Tv |
| X-Yellow | Chromaticity Chart |
| Y-Yellow | Chromaticity Chart |
| X-Green | Chromaticity Chart |
| Y-Green | Chromaticity Chart |
| X-D65 | Chromaticity Chart |
| Y-D65 | Chromaticity Chart |
| Red Signal T | ≧ 8% |
| Yellow Signal T | ≧ 6% |
| Green Signal T | ≧ 6% |

**[Table 3]**

| Table 3. Signal visibility standards of eyewear specified in AS/NZS 1067:2003 | |
|---|---|
| Item | Standard |
| Luminous-D65,Tv | - |
| Spectrum,T(450-650nm) | ≧0.20Tv |
| Red Signal Attenuation, Qred | ≧0.8 |
| Yellow Signal Attenuation, Qyellow | ≧0.8 |
| Green Signal Attenuation, Qgreen | ≧0.6 |
| Blue Signal Attenuation, Qblue | ≧0.7 |

The present invention has been made in view of such circumstances, and an object of the present invention is to provide an eyewear such as polarized sunglasses having a light reflective layer and a polarizing element layer, the eyewear having a metallic color tone conforming to signal visibility standards of various countries, and an optical film and an optical laminate for the eyewear.

### Solution to Problem

As a result of intensive studies to solve the above problems, the present inventors have newly found that an eyewear having performance conforming to signal visibility standards of various countries can be realized by using an optical film that has at least a light reflective layer and a polarizing element layer and is not limited to a reflection wavelength of the light reflective layer or has transmission hue a* value and b* value adjusted according to a specific reflection wavelength, thereby accomplishing the present invention. An optical film of the present invention is defined in claim 1. Dependent claims refer to preferred embodiments.

### Advantageous Effects of Invention

The present invention can provide an eyewear such as polarized sunglasses with a metallic color tone confirming to signal visibility standards of various countries, and an optical film and an optical laminate for the eyewear.

### Brief Description of Drawings

Fig. 1 is a chromaticity diagram showing an acceptance range in a CIE standard sign system, which is specified in ANSI Z80.3:2010, for traffic signals and sunlight when viewed through an eyewear.
Fig. 2 is a graph showing spectral characteristics of a light reflective layer, a polarizing element layer, and an optical laminate in Example 6.

### Description of Embodiments

The optical film of the present invention has at least a light reflective layer that reflects light in a visible light region and a polarizing element layer.

The light reflective layer has a reflection wavelength region in the visible region so as to exhibit a metallic color tone. For example, the light reflective layer has a central reflection wavelength in a range of 400 nm to 800 nm, preferably 410 to 780 nm, and more preferably 430 to 700 nm, and is appropriately selected according to a desired color tone of a reflection color. For example, when the central reflection wavelength is 400 nm to 500 nm, the reflection color is metallic blue, when the central reflection wavelength is 500 nm to 600 nm, the reflection color is metallic green, when the central reflection wavelength is 600 nm to 660 nm, the reflection color is metallic orange, and when the central reflection wavelength is 660 nm to 750 nm, the reflection color is metallic red. Hereinafter, each reflection wavelength region having the central reflection wavelength of 400 nm to 500 nm, 500 nm to 600 nm, 600 nm to 660 nm, and 660 nm to 750 nm is referred to as a "central reflection wavelength region".

Here, since the reflection wavelength of the light reflective layer has a reflection wavelength region, the reflection wavelength is expressed by using a central reflection wavelength that is a central value of the reflection wavelength region. The central reflection wavelength means a central wavelength of the reflection region of the light reflective layer, and a value thereof is, according to the claimed subject-matter, an intermediate value between wavelengths on a short wavelength side and a long wavelength side at which a transmittance in the reflection region is 75% in spectroscopic measurement. As an example, in a case where a certain light reflective layer is subjected to spectroscopic measurement, when wavelengths on a short wavelength side and a long wavelength side at which a transmittance in the reflection region is 75% are 500 nm and 600 nm, respectively, the central reflection wavelength of the light reflective layer is 550 nm. The transmittance used for calculating the central wavelength can be selected according to a waveform shape, a minimum transmittance of a region, and the like, but the transmittance used in the present specification and claims is 75%.

The visibility of a human eye varies depending on a wavelength region of visible light. In this relationship, a transmission hue conforming to the signal visibility standards also varies depending on the reflection wavelength region of the light reflective layer. Here, the transmission hue refers to a hue exhibited by light transmitted through an object such as an optical film.

When the central reflection wavelength of the light reflective layer is in a region of 600 nm or more and less than 660 nm (a light source is a C light source or a D65 light source), the transmission hue of the optical film is within a region of -15 ≤ a* ≤ 10 and -20 ≤ b* ≤ 20, more preferably -10 ≤ a* ≤ 10 and -10 ≤ b* ≤ 10, and still more preferably within a region of -10 ≤ a* ≤ 5 and -5 ≤ b* ≤ 5**.** When the transmission hue is within the region, the transmission hue conforms to the signal visibility standards. In addition, at this time, the minimum transmittance of the light reflective layer within the central reflection wavelength region is preferably 21% or more, more preferably 25% or more, still more preferably 30% or more, and particularly preferably 40% or more. An upper limit thereof is about 90% and more preferably about 80% from the viewpoint of designability (metallic tone).

When the central reflection wavelength of the light reflective layer is in a region of 500 nm or more and less than 600 nm (a light source is a C light source or a D65 light source), the transmission hue of the optical film is within a region of -5 ≤ a* ≤ 20 and -20 ≤ b* ≤ 30, preferably within a region of -5 ≤ a* ≤ 10 and -15 ≤ b* ≤ 15, more preferably -5 ≤ a* ≤ 10 and -15 ≤ b* ≤ 5, and still more preferably -5 ≤ a* ≤ 5 and -5 ≤ b* ≤ 5**.** When the transmission hue is within the region, the transmission hue conforms to the signal visibility standards. In addition, at this time, the minimum transmittance of the reflective layer within the central reflection wavelength region is preferably 20% or more, more preferably 21% or more, still more preferably 30% or more, and particularly preferably 40% or more. An upper limit thereof is about 90% and more preferably about 80% from the viewpoint of designability (metallic tone).

When the central reflection wavelength of the light reflective layer is in a region of 660 nm or more and less than 750 nm (a light source is a C light source or a D65 light source), the transmission hue of the optical film is within a region of -10 ≤ a* ≤ 10 and -5 ≤ b* ≤ 35, preferably -10 ≤ a* ≤ 5 and -5 ≤ b* ≤ 15, and more preferably within a region of -5 ≤ a* ≤ 5 and -5 ≤ b* ≤ 5. When the transmission hue is within the region, the transmission hue conforms to the signal visibility standards. In addition, at this time, the minimum transmittance of the light reflective layer within the central reflection wavelength region is preferably 15% or more, more preferably 21% or more, still more preferably 25% or more, and particularly preferably 30% or more. An upper limit thereof is about 90% and more preferably about 80% from the viewpoint of designability (metallic tone). In addition, in a case where an a* value is within a region of -10 ≤ a* ≤ -5, the minimum transmittance of the light reflective layer within the reflection wavelength region is preferably 21% or more, more preferably 25% or more, and still more preferably 30% or more, and b* is not limited as long as it is within the region. An upper limit of the minimum transmittance is about 90% and more preferably about 80% from the viewpoint of designability (metallic tone).

When the central reflection wavelength of the light reflective layer is in a region of 400 nm or more and less than 500 nm (a light source is a C light source or a D65 light source), the transmission hue of the optical film is within a region of -15 ≤ a* ≤ 25 and -10 ≤ b* ≤ 40, preferably -10 ≤ a* ≤ 10 and -10 ≤ b* ≤ 35, more preferably -10 ≤ a* ≤ 10 and -5 ≤ b* ≤ 35, and still more preferably within a region of -5 ≤ a* ≤ 5 and -5 ≤ b* ≤ 5**.** When the transmission hue is within the region, the transmission hue conforms to the signal visibility standards. In addition, at this time, the minimum transmittance of the reflective layer within the central reflection wavelength region is 15% or more, preferably 20% or more, more preferably 21% or more, and still more preferably 30% or more. An upper limit of the minimum transmittance is about 90% and more preferably about 80% from the viewpoint of designability (metallic tone).

Regardless of the central reflection wavelength of the light reflective layer, the transmission hue of the optical film is preferably within a region of -10 ≤ a* ≤ 10 and -10 ≤ b* ≤ 10 (however, excluding a case where the central reflection wavelength of the light reflective layer is in a region of 500 nm or more and less than 600 nm; in a case where the central reflection wavelength of the light reflective layer is in a region of 500 nm or more and less than 600 nm, the transmission hue of the optical film is preferably within a region of -5 ≤ a* ≤ 10 and -10 ≤ b* ≤ 10), and preferably within a region of -5 ≤ a* ≤ 5 and -5 ≤ b* ≤ 5**.** When the transmission hue is within the region, the transmission hue can conform to the signal visibility standards. In addition, in the case of the transmission hue region, since the transmission hue is neutral, a person feels a natural color when wearing the eyewear, which is preferable.

A case where a thickness of the light reflective layer is 0.1 µm or more and 10.0 µm or less is a preferred aspect of the present invention. A lower limit of the thickness of the light reflective layer is preferably 0.5 µm, 0.7 µm, 0.8 µm, 0.9 µm, 1.0 µm, 1.1 µm, 1.2 µm, or 1.3 µm (here, as a numerical value thereof is larger, a lower limit value is more preferable), and particularly preferably 1.4 µm. In addition, an upper limit of the thickness of the light reflective layer is preferably 5.0 µm, 4.0 µm, 3.0 µm, 2.5 µm, 2.0 µm, 1.9 µm, 1.8 µm, or 1.7 µm (here, as a numerical value thereof is smaller, an upper limit value is more preferable), and particularly preferably 1.6 µm. That is, the most preferred range as the thickness of the light reflective layer is 1.4 µm or more and 1.6 µm or less.

The light reflective layer used in the present invention for obtaining the transmission hue is not particularly limited, and examples thereof include known vapor deposited multilayer film, cholesteric liquid crystal layer, and the like. The light reflective layer is preferably a cholesteric liquid crystal layer. The light reflective layer preferably comprises one or more cholesteric liquid crystal layers, and here, the light reflective layer may comprise only one cholesteric liquid crystal layer, or may be a laminate of two or more cholesteric liquid crystal layers. The light reflective layer is more preferably formed by laminating a cholesteric liquid crystal layer R composed of a cholesteric liquid crystal layer having a right-handed helical orientation and a cholesteric liquid crystal layer L composed of a cholesteric liquid crystal layer having a left-handed helical orientation. By laminating the cholesteric liquid crystal layer R and the cholesteric liquid crystal layer L**,** a decrease in degree of polarization of the optical film of the present invention is suppressed. For example, counterclockwise circularly polarized light transmitted through the cholesteric liquid crystal layer R is reflected by the cholesteric liquid crystal layer L**,** such that transmission of the circularly polarized light is suppressed, and inhibition of a polarizing function by the polarizing element layer is reduced.

The light reflective layer preferably has a cholesteric liquid crystal layer R having a right-handed helical orientation and a cholesteric liquid crystal layer L having a left-handed helical orientation. Here, reflection wavelengths of the cholesteric liquid crystal layer R and the cholesteric liquid crystal layer L preferably coincide with each other, and in particular, a deviation of the central reflection wavelength at the center of the reflection wavelength region between the cholesteric liquid crystal layer R and the cholesteric liquid crystal layer L may be preferably within 20 nm, more preferably within 10 nm, and still more preferably within 5 nm. Depending on the type of the polarizing element layer used in the present invention, for example, in a case of a neutral gray polarizing element layer, when a deviation of the central reflection wavelength exceeds 20 nm, for example, the counterclockwise circularly polarized light transmitted through the cholesteric liquid crystal layer R is not sufficiently reflected by the cholesteric liquid crystal layer L, and the degree of polarization is significantly reduced, which may reduce the function as the polarized sunglasses.

The light reflective layer used in the present invention may comprise a plurality of sets of cholesteric liquid crystal layers R and cholesteric liquid crystal layers L having different central reflection wavelengths. For example, when the cholesteric liquid crystal layer R and the cholesteric liquid crystal layer L having a central reflection wavelength of X nm are denoted by Rx and Lx, respectively, a set of R450 and L450 and a set of R650 and L650 are laminated, such that the light reflective layer can reflect light around 450 nm and around 650 nm at the same time. This combination is not particularly limited, and complex and various reflection colors can be obtained by this combination.

The cholesteric liquid crystal is not particularly limited as long as it is formed of a nematic liquid crystal having chirality, a liquid crystal composition obtained by adding a chiral agent to a nematic liquid crystal, or a compound. Since a helical direction or a reflection wavelength can be arbitrarily designed depending on the type and amount of the chiral agent, a method of adding a chiral agent to a nematic liquid crystal to obtain cholesteric liquid crystals is preferable. Unlike liquid crystals operated by a so-called electric field, the nematic liquid crystals are used in a state in which a helical orientation is fixed, and thus it is preferable to use a nematic liquid crystal monomer having a polymerizable group.

The nematic liquid crystal monomer having a polymerizable group is a compound having a polymerizable group in the molecule and exhibiting liquid crystallinity in a predetermined temperature range or concentration range. Examples of the polymerizable group include a (meth)acryloyl group, a vinyl group, a chalconyl group, a cinnamoyl group, and an epoxy group. In addition, in order to exhibit liquid crystallinity, it is preferable to have a mesogenic group in the molecule, and the mesogenic group means, for example, a rod-shaped or plate-shaped substituent such as a biphenyl group, a terphenyl group, a (poly)benzoic acid phenyl ester group, a (poly)ether group, a benzylideneaniline group, or an acenaphthoquinoxaline group, and a disk-shaped substituent such as a triphenylene group, a phthalocyanine group, or an aza-crown group, that is, a group having an ability to induce a liquid crystal phase behavior. A liquid crystal compound having a rod-shaped or plate-shaped group is known in the art as a calamitic liquid crystal. Specific examples of the nematic liquid crystal monomer having a polymerizable group include polymerizable liquid crystals described in JP 2003-315556 A and JP 2004-29824 A, PALIOCOLOR series (manufactured by BASF) such as PALIOCOLOR LC242 and PALIOCOLOR LC1057, and RMM series (manufactured by Merck). These nematic liquid crystal monomers having a polymerizable group can be used alone or in combination of two or more.

As the chiral agent, a compound that can induce a right-handed or left-handed helical orientation of the nematic liquid crystal monomer having a polymerizable group and has a polymerizable group similarly to the nematic liquid crystal monomer having a polymerizable group is preferable. Examples of the chiral agent include Paliocolor LC756 (manufactured by BASF), a compound having an optically active binaphthyl structure described in JP 2002-179668 A and JP 2007-271808 A, and a compound having an optically active isosorbide structure described in JP 2003-306491 A and JP 2003-313292 A. The amount of the chiral agent added varies depending on the type of the chiral agent and the wavelength to be reflected, and is preferably about 0.5 parts by weight to 40 parts by weight and more preferably about 1 part by weight to 25 parts by weight with respect to 100 parts by weight of the nematic liquid crystal monomer having a polymerizable group.

Furthermore, it is possible to add, to the liquid crystal compound, a polymerizable compound having no liquid crystallinity, the polymerizable compound being capable of reacting with a nematic liquid crystal monomer having a polymerizable group. Examples of the compound include an ultraviolet curable resin. Examples of the ultraviolet curable resin include dipentaerythritol hexa(meth)acrylate, a reaction product of dipentaerythritol penta(meth)acrylate and 1,6-hexamethylene di-isocyanate, a reaction product of triisocyanate having an isocyanuric ring and pentaerythritol tri(meth)acrylate, a reaction product of pentaerythritol tri(meth)acrylate and isophorone di-isocyanate, dipentaerythritol penta(meth)acrylate, dipentaerythritol tetra(meth)acrylate, pentaerythritol tetra(meth)acrylate, pentaerythritol tri(meth)acrylate, trimethylolpropane tri(meth)acrylate, ditrimethylolpropane tetra(meth)acrylate, tris(acryloxyethyl) isocyanurate, tris(methacryloxyethyl) isocyanurate, a reaction product of glycerol triglycidyl ether and (meth)acrylic acid, caprolactone-modified tris(acryloxyethyl) isocyanurate, a reaction product of trimethylolpropane triglycidyl ether, and (meth)acrylic acid, triglycerol-di-(meth)acrylate, a reaction product of propylene glycol-di-glycidyl ether and (meth)acrylic acid, polypropylene glycol-di-(meth)acrylate, tripropylene glycol-di-(meth)acrylate, polyethylene glycol-di-(meth)acrylate, tetraethylene glycol-di-(meth)acrylate, triethylene glycol-di-(meth)acrylate, pentaerythritol di-(meth)acrylate, a reaction product of 1,6-hexanediol-di-glycidyl ether and (meth)acrylic acid, 1,6-hexanediol-di-(meth)acrylate, glycerol-di-(meth)acrylate, a reaction product of ethylene glycol-di-glycidyl ether and (meth)acrylic acid, a reaction product of diethylene glycol-di-glycidyl ether and (meth)acrylic acid, bis(acryloxyethyl)hydroxyethyl isocyanurate, bis(methacryloxyethyl)hydroxyethyl isocyanurate, a reaction product of bisphenol A-di-glycidyl ether and (meth)acrylic acid, tetrahydrofurfuryl (meth)acrylate, caprolactone-modified tetrahydrofurfuryl (meth)acrylate, 2-hydroxyethyl (meth)acrylate, 2-hydroxypropyl (meth)acrylate, polypropylene glycol (meth)acrylate, polyethylene glycol (meth)acrylate, phenoxyhydroxypropyl (meth)acrylate, acryloylmorpholine, methoxypolyethylene glycol (meth)acrylate, methoxytetraethylene glycol (meth)acrylate, methoxytriethylene glycol (meth)acrylate, methoxyethylene glycol (meth)acrylate, methoxyethyl (meth)acrylate, glycidyl (meth)acrylate, glycerol (meth)acrylate, ethyl carbitol (meth)acrylate, 2-ethoxyethyl (meth)acrylate, N,N-dimethylaminoethyl (meth)acrylate, 2-cyanoethyl (meth)acrylate, a reaction product of butyl glycidyl ether and (meth)acrylic acid, butoxytriethylene glycol (meth)acrylate, and butanediol mono (meth) acrylate. These ultraviolet curable resins can be used alone or in combination of two or more. These ultraviolet curable resins having no liquid crystallinity need to be added to such an extent that the liquid crystallinity of the liquid crystalline composition is not impaired, and the amount of the ultraviolet curable resin added is preferably 0.1 to 20 parts by weight and more preferably about 1.0 to 10 parts by weight with respect to 100 parts by weight of the nematic liquid crystal monomer having a polymerizable group.

The liquid crystal composition may further contain a solvent. The solvent is not particularly limited as long as it can dissolve the liquid crystal monomer, the chiral agent, and the like to be used, and examples thereof include cyclopentanone, methyl ethyl ketone, methyl isobutyl ketone, and toluene. The amount of the solvent added may be any amount as long as the solvent can dissolve the liquid crystal monomer, the chiral agent, and the like to be used, and can be appropriately determined by those skilled in the art.

In a case where the nematic liquid crystal monomer having a polymerizable group or another polymerizable compound used in the present invention is an ultraviolet curing type, a photopolymerization initiator is further added to the liquid crystal composition in order to cure the liquid crystal composition with ultraviolet rays. Examples of the photopolymerization initiator include an acetophenone-based compound such as 2-methyl-1-[4-(methylthio)phenyl]-2-morpholinopropane-1 (Irgacure 907, manufactured by BASF), 1-hydroxycyclohexyl phenyl ketone (Irgacure 184, manufactured by BASF), 4-(2-hydroxyethoxy)-phenyl (2-hydroxy-2-propyl) ketone (Irgacure 2959, manufactured by BASF), 1-(4-dodecylphenyl)-2-hydroxy-2-methylpropan-1-one (DaroCur 953, manufactured by Merck), 1-(4-isopropylphenyl)-2-hydroxy-2-methylpropan-1-one (DaroCur 1116, manufactured by Merck), 2-hydroxy-2-methyl-1-phenylpropan-1-one (Irgacure 1173, manufactured by BASF), or diethoxyacetophenone; a benzoin-based compound such as benzoin, benzoin methyl ether, benzoin ethyl ether, benzoin isopropyl ether, benzoin isobutyl ether, or 2,2-dimethoxy-2-phenylacetophenone (Irgacure 651, manufactured by BASF); a benzophenone-based compound such as benzoylbenzoic acid, methyl benzoylbenzoate, 4-phenylbenzophenone, hydroxybenzophenone, 4-benzoyl-4'-methyl diphenyl sulfide, or 3,3'-dimethyl-4-methoxybenzophenone (Kayacure MBP, manufactured by Nippon Kayaku Co., Ltd.); and a thioxanthone-based compound such as thioxanthone, 2-chlorothioxanthone (Kayacure CTX, manufactured by Nippon Kayaku Co., Ltd.), 2-methylthioxanthone, 2,4-dimethylthioxanthone (Kayacure RTX), isopropylthioxanthone, 2,4-dichlorothioxanthone (Kayacure CTX, manufactured by Nippon Kayaku Co., Ltd.), 2,4-diethylthioxanthone (KayaCure DETX, manufactured by Nippon Kayaku Co., Ltd.), or 2,4-diisopropylthioxanthone (KayaCure DITX, manufactured by Nippon Kayaku Co., Ltd.). Examples of the photopolymerization initiator preferably include Irgacure TPO, Irgacure TPO-L, Irgacure OXE01, Irgacure OXE02, Irgacure 1300, Irgacure 184, Irgacure 369, Irgacure 379, Irgacure 819, Irgacure 127, Irgacure 907, and Irgacure 1173 (all manufactured by BASF), and examples of the photopolymerization initiator particularly preferably include Irgacure TPO, Irgacure TPO-L, Irgacure OXE01, Irgacure OXE02, Irgacure 1300, and Irgacure 907. These photopolymerization initiators can be used alone or as a mixture of two or more at any ratio. At least one photopolymerization initiator having an absorption band at a wavelength of 300 nm or more is preferably used.

In a case where a benzophenone-based compound or a thioxanthone-based compound is used, it is also possible to use an auxiliary agent in combination in order to promote a photopolymerization reaction. Examples of the auxiliary agent include amine-based compounds such as triethanolamine, methyldiethanolamine, triisopropanolamine, n-butylamine, N-methyldiethanolamine, diethylaminoethyl methacrylate, Michler's ketone, 4,4'-diethylaminophenone, ethyl 4-dimethylaminobenzoate, (n-butoxy)ethyl 4-dimethylaminobenzoate, and isoamyl 4-dimethylaminobenzoate.

The amount of the photopolymerization initiator and auxiliary agent added is preferably in a range in which the liquid crystallinity of the liquid crystal composition is not affected, and the amount thereof is preferably 0.5 parts by weight or more and 10 parts by weight or less, and more preferably about 2 parts by weight or more and 8 parts by weight or less with respect to 100 parts by weight of the ultraviolet-curing compounds contained in the liquid crystal composition. In addition, the amount of the auxiliary agent may be about 0.5 to 2 times the amount of the photopolymerization initiator on a weight basis.

As a method for producing the light reflective layer using the cholesteric liquid crystal, for example, a required amount of a chiral agent for a right-handed or left-handed orientation is added to a nematic liquid crystal monomer having a polymerizable group so as to reflect a desired wavelength. Next, the chiral agent and the nematic liquid crystal monomer are dissolved in a solvent and a photopolymerization initiator is added to prepare a liquid crystal composition. Next, the liquid crystal composition is applied onto a plastic substrate such as a PET film so that a thickness is as uniform as possible, and the liquid crystal composition is left for a predetermined period of time under a temperature condition so that it becomes a cholesteric liquid crystal on the substrate and is oriented at a desired helical pitch while the solvent is removed by heating. Preferred drying temperature and orientation temperature are 40 to 150°C. At this time, when a surface of the plastic film is subjected to an orientation treatment such as rubbing or stretching before application, the orientation of the cholesteric liquid crystals can be more uniform, such that a haze value of a film can be reduced. Next, while the orientation state is maintained, irradiation with ultraviolet rays is performed with a high-pressure mercury lamp or the like to fix the orientation, thereby obtaining a light reflective layer. Here, in a case where a chiral agent for a right-handed helical orientation is selected, a cholesteric liquid crystal layer R is obtained, and in a case where a chiral agent for a left-handed helical orientation is selected, a cholesteric liquid crystal layer L is obtained. The cholesteric liquid crystal layer R selectively reflects clockwise circularly polarized light, and the cholesteric liquid crystal layer L selectively reflects counterclockwise circularly polarized light. A phenomenon of selectively reflecting a specific circularly polarized light is referred to as selective reflection, and a wavelength region in which selective reflection is performed is referred to as a selective reflection region. In the claims and specification of the present application, the reflection region of the cholesteric liquid crystal layer means a selective reflection region.

A means for laminating the cholesteric liquid crystal layers is not particularly limited, and examples thereof include a method of directly laminating the cholesteric liquid crystal layers and a method of laminating the cholesteric liquid crystal layers using an adhesive or a pressure-sensitive adhesive. It is preferable to laminate the cholesteric liquid crystal layers using an adhesive or a pressure-sensitive adhesive. Examples of the pressure-sensitive adhesive include acrylic-based and rubber-based pressure-sensitive adhesives, and an acrylic-based pressure-sensitive adhesive whose adhesiveness, holding power, and the like are easily adjusted is preferable. In addition, examples of the adhesive include an ultraviolet curable resin composition and a thermosetting resin composition. In the case of the ultraviolet curable resin, a composition obtained by mixing a plurality of monomers having an acryloyl group or an epoxy group can be cured and bonded by irradiation with ultraviolet rays in the presence of a photopolymerization initiator. In the case of the thermosetting resin composition, a composition obtained by mixing a plurality of monomers having an epoxy group can be cured and bonded by heating in the presence of an acid catalyst. Alternatively, a composition comprising a plurality of monomers or polymers having an amino group, a carboxyl group, a hydroxyl group can be cured and bonded by heating in the presence of a compound having an isocyanate group or melamine.

The polarizing element layer used in the present invention is preferably a polarizing element layer composed of a stretched polymer film containing a dichroic pigment. Examples of the polarizing element layer that can be used in the present invention typically include a PVA polarizing film. A production method is not particularly limited, and from the viewpoint of heat resistance, it is preferable to adsorb a pigment of a dichroic dye to a polymer film formed of polyvinyl alcohol or a derivative thereof, and the film is produced by uniaxially stretching and orienting the film. As the pigment, a direct dye composed of an azo pigment having a sulfonate group is particularly preferable.

In the polarizing element layer used in the present invention, a product (T0%) of the minimum transmittance of the light reflective layer and the transmittance of the polarizing element layer in the central reflection wavelength of the light reflective layer is 5% or more and more preferably 10% or more with respect to the light reflective layer that reflects a desired wavelength, and a difference (T2-T1) between an average value (T1%) of the product of the transmittance of the light reflective layer and the transmittance of the polarizing element layer in the central reflection wavelength region of the light reflective layer and an average value (T2%) of the product of the transmittance of the light reflective layer and the transmittance of the polarizing element layer in the wavelength region excluding the central reflection wavelength region in a visible light region of 400 to 750 nm satisfies -10 or more and 20 or less. T2 - T1 is more preferably -6 or more and 15 or less and particularly preferably -3 or more and 10 or less. Here, the wavelength region excluding the central reflection wavelength region is, for example, in a range of 500 nm to 750 nm when the central reflection wavelength region of the light reflective layer is 400 nm to 500 nm, in a range of 400 nm to 500 nm and 600 to 750 nm when the central reflection wavelength region of the light reflective layer is 500 nm to 600 nm, in a range of 400 nm to 600 nm and 660 nm to 750 nm when the central reflection wavelength region of the light reflective layer is 600 nm to 660 nm, and in a range of 400 nm to 660 nm when the central reflection wavelength region of the light reflective layer is 660 nm to 750 nm. As a result, a transmission spectrum of the laminate of the light reflective layer and the polarizing element layer becomes close to flat, and the transmission hue can be closer to neutral.

The optical film of the present invention can be obtained by laminating the light reflective layer and the polarizing element layer. A method for laminating the light reflective layer and the polarizing element layer is not particularly limited, and it is desirable to bond the light reflective layer and the polarizing element layer to each other with an adhesive layer interposed therebetween because a high adhesive force can be obtained. As the adhesive layer, either a hot-melt adhesive or a curable adhesive can be used. In general, as the curable adhesive, an acrylic resin-based material, a urethane resin-based material, a polyester resin-based material, a melamine resin-based material, an epoxy resin-based material, a silicone-based material, and the like can be used, and in particular, a two-liquid thermosetting urethane resin comprising a polyurethane prepolymer, which is a urethane resin-based material, and a curing agent is preferable because an adhesive force and processability are excellent during bending. As the adhesive for bonding the light reflective layer and the polarizing element layer, an adhesive in which a light modulation dye is dissolved may be used.

The optical film satisfies the standards for traffic signal visibility specified in at least one of ISO 12312-1:2013, ANSI Z80.3:2010, and AS/NZS 1067:2003, and preferably satisfies all three of these standards.

The optical laminate of the present invention can be obtained by interposing the optical film between the supports. In an embodiment, the optical laminate of the present invention comprises an optical film, particularly the optical film of the present invention, disposed between the first support and the second support. The support is preferably formed of plastic, and for example, a resin such as polycarbonate, polyamide, or triacetyl cellulose (TAC) can be used. In sunglasses or goggles requiring impact resistance and heat resistance, polycarbonate is preferably used for the support, and among them, an aromatic polycarbonate using bisphenol A as a raw material is more preferably used. In the embodiment, the first support and the second support are preferably polycarbonate, and more preferably aromatic polycarbonate.

A total light transmittance of the support is preferably 70% or more, more preferably 80% or more, and still more preferably 85% or more, in order to secure visibility.

In addition, in a case where the optimum processing temperature of each polarizing film layer is low, it is preferable to select, for example, an aromatic polycarbonate/alicyclic polyester composition (in particular, for example, an alicyclic polyester in which 1,4-cyclohexanedicarboxylic acid is a main component of a dicarboxylic acid component and 1,4-cyclohexanedimethanol is a main component of a diol component) or a polyamide having a glass transition temperature of 130°C or lower, as a raw material of the support.

In addition, a support may be provided between the light reflective layer and the polarizing element layer. This is advantageous in increasing strength of the optical laminate and the like. A method for interposing the support between the light reflective layer and the polarizing element layer is not particularly limited, and it is desirable to interpose the support with an adhesive layer between the light reflective layer and the polarizing element layer in order to obtain a high adhesive force. As the adhesive layer, either a hot-melt adhesive or a curable adhesive can be used. In general, as the curable adhesive, for example, an acrylic resin-based material, a urethane resin-based material, a polyester resin-based material, a melamine resin-based material, an epoxy resin-based material, a silicone-based material, and the like can be used, and in particular, a two-liquid thermosetting urethane resin comprising a polyurethane prepolymer, which is a urethane resin-based material, and a curing agent is preferable because an adhesive force and processability are excellent during bending.

The eyewear of the present invention comprises the optical film of the present invention or the optical laminate of the present invention. Specifically, the optical film or the optical laminate of the present invention obtained as described above is used and molded into a desired shape so that the light reflective layer is provided outside of the polarizing element layer when viewed from the wearer, and the optical film or the optical laminate is fixed to a frame or the like, such that the eyewear of the present invention such as sunglasses, goggles, or a helmet visor can be obtained.

The eyewear is an eyewear conforming to signal visibility standards of various countries, and is an eyewear having a metallic color tone and an anti-glare property with high designability.

For example, in the case of sunglasses, the optical film or the optical laminate is punched into a desired shape, and then subjected to bending processing. A method of bending processing is not particularly limited, and bending processing may be performed through a process that can impart a spherical shape or a non-spherical shape according to the purpose. A resin may be further injected into the bent product. In this case, there is also an advantage that thickness unevenness of the optical laminate is not observed, and even a lens having no focal refractive power is used for a product particularly excellent in impact resistance, appearance, and eyestrain. The resin to be injected is preferably the same material as that of the layer with which the resin to be injected is in contact in order to prevent deterioration in appearance due to a difference in refractive index. A hard coat, an antireflection film, and the like are appropriately formed on surfaces of the sunglasses, and then the sunglasses can be obtained after being fixed to a frame or the like by lens grinding, piercing, screw tightening, or the like. Examples

Hereinafter, the present invention will be described in detail with reference to Examples. In the Examples, a part(s) means part(s) by weight. The present invention is not limited to the exemplified Examples.

### <Preparation of Coating Liquid (Liquid Crystal Composition)>

Each of coating liquids (agent R) and (agent L) having compositions shown in the following table was prepared. In the following table, the prescribed amount is expressed in part(s) by weight.

**[Table 4]**

| Example of composition of coating liquid (agent R) | | | | | | | |
|---|---|---|---|---|---|---|---|
| Material (type) | Material name (Manufacturer) | Prescribed amount | | | | | |
| | | R1 | R2 | R3 | R4 | R5 | R6 |
| Polymerizable liquid crystal monomer | LC242 (BASF) | 20.00 | 20.00 | 20.00 | 20.00 | 20.00 | 20.00 |
| Chiral agent | LC756 (BASF) | 1.09 | 1.22 | 1.00 | 1.43 | 1.54 | 1.13 |
| Polymerization initiator | Irgacure TPO (BASF) | 1.00 | 1.00 | 1.00 | 1.00 | 1.00 | 1.00 |
| Solvent | Cyclopentanone | 80.00 | 80.00 | 80.00 | 80.00 | 80.00 | 80.00 |

**[Table 5]**

| Example of composition of coating liquid (agent L) | | | | | | | |
|---|---|---|---|---|---|---|---|
| Material (type) | Material name (Manufacturer) | Prescribed amount | | | | | |
| | | L1 | L2 | L3 | L4 | L5 | L6 |
| Polymerizable liquid crystal monomer | LC242 (BASF) | 20.00 | 20.00 | 20.00 | 20.00 | 20.00 | 20.00 |
| Chiral agent | Described in Chemical Formula 1 | 2.95 | 3.33 | 2.69 | 4.00 | 4.32 | 3.06 |
| Polymerization initiator | Irgacure TPO (BASF) | 1.00 | 1.00 | 1.00 | 1.00 | 1.00 | 1.00 |
| Solvent | Cyclopentanone | 80.00 | 80.00 | 80.00 | 80.00 | 80.00 | 80.00 |

### Chiral agent: Compound 1 (Exemplary Compound 2-1 described in JP 2002-179668 A)

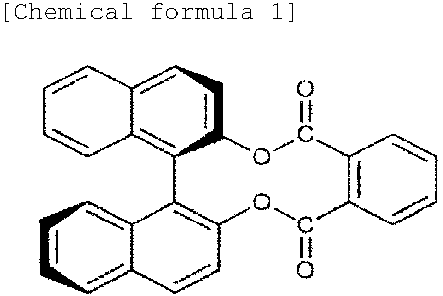

### [Example 1]

### <Production of Light Reflective Layer>

Light reflective layers were prepared using the prepared coating liquids (R1) and (L1), respectively, by the following procedure. Next, the light reflective layers were laminated to produce a laminate of the light reflective layers used in the present invention. As a plastic substrate, a PET film (without an undercoat layer) manufactured by Toyobo Co., Ltd. was used.
(1) Each of the coating liquids was applied onto the PET film at room temperature using a wire bar so that a thickness of the film after drying was 1.2 µm.
(2) Heating was performed at 150°C for 5 minutes to remove the solvent and obtain a cholesteric liquid crystal phase. Next, UV irradiation was performed with a high-pressure mercury lamp (manufactured by HARISON TOSHIBA LIGHTING Corporation) at an output of 120 W for 5 to 10 seconds to fix the cholesteric liquid crystal phase, thereby obtaining a light reflective layer.
(3) The cholesteric liquid crystal (R1) and the cholesteric liquid crystal layer (L1) formed on the PET film and produced in (1) and (2) were laminated using an acrylic-based pressure-sensitive adhesive so that the cholesteric liquid crystal layers were in contact with each other.
(4) The PET films formed on both sides were peeled off.

In this way, a light reflective layer used in the present invention was obtained, the light reflective layer comprising two layers in which the cholesteric liquid crystal layer (R1) and the cholesteric liquid crystal layer (L1) were laminated. The central reflection wavelengths of the cholesteric liquid crystal layer (R1) and the cholesteric liquid crystal layer (L1) were 615 nm and 620 nm, respectively.

### <Production of Polarizing Element Layer>

Polyvinyl alcohol (manufactured by Kuraray Co., Ltd., trade name: KURARAY VINYLON #750) was dyed in an aqueous solution containing 0.41 g/L of chlorantine fast red (C.I. 28160), 0.16 g/L of chrysophenine (C.I. 24895), 0.14 g/L of solophenyl blue 4GL (C.I. 34200), and 10 g/L of sodium sulfate at 35°C for 3 minutes, and then, 4-fold stretching was performed in the solution. Then, the dyed sheet was immersed in an aqueous solution containing 2.5 g/L of nickel acetate and 6.6 g/L of boric acid at 35°C for 3 minutes. Then, the sheet was dried at room temperature for 3 minutes while the tension state was maintained, and then, the dried sheet was subjected to a heating treatment at 70°C for 3 minutes, thereby obtaining a polarizing element layer. As a result of measuring a degree of polarization of the polarizing element layer by an absolute polarization method using a spectrophotometer, the degree of polarization was 97.1%.

### <Production of Optical Film>

Next, the laminate of the light reflective layers and the polarizing element layer were bonded with a urethane resin-based adhesive to obtain an optical film of the present invention.

### <Production of Optical Laminate>

A bisphenol A-type aromatic polycarbonate sheet (manufactured by Mitsubishi Gas Chemical Company, Inc.) having a thickness of 0.3 mm was bonded to both surfaces of the optical film with a urethane resin-based adhesive to produce an optical laminate.

### <Production of Polarized Sunglasses>

The optical laminate was formed into a perfect circle having a diameter of 79.5 mm as a basic shape, the optical laminate was punched into a strip shape with a mold that cut it into a width of 55 mm in a vertical direction, and bending processing was performed using a mold having a base curve of 7.95 (curvature radius of 66.67 mm). The bent optical laminate was inserted into a mold for injection molding, and molten polycarbonate was injection-molded on a concave surface, thereby obtaining a polarizing lens. Subsequently, lens grinding was performed in accordance with a frame, and the polarizing lens was fitted into the frame, thereby producing polarized sunglasses.

### [Example 2]

### <Production of Light Reflective Layer>

A light reflective layer used in the present invention was obtained in the same operation as in Example 1, except that each of the prepared coating liquids (R2) and (L2) was used and applied so that a thickness of the light reflective layer after coating and drying was 1.0 µm. Both the central reflection wavelengths of the cholesteric liquid crystal layer (R2) and the cholesteric liquid crystal layer (L2) were 560 nm.

### <Production of Polarizing Element Layer>

Polyvinyl alcohol (manufactured by Kuraray Co., Ltd., trade name: KURARAY VINYLON #750) was dyed in an aqueous solution containing 0.07 g/L of chlorantine fast red (C.I. 28160), 0.34 g/L of chrysophenine (C.I. 24895), 0.3 g/L of solophenyl blue 4GL (C.I. 34200), and 10 g/L of sodium sulfate at 35°C for 3 minutes, and then, 4-fold stretching was performed in the solution. Then, the dyed sheet was immersed in an aqueous solution containing 2.5 g/L of nickel acetate and 6.6 g/L of boric acid at 35°C for 3 minutes. Then, the sheet was dried at room temperature for 3 minutes while the tension state was maintained, and then, the dried sheet was subjected to a heating treatment at 70°C for 3 minutes, thereby obtaining a polarizing element layer. As a result of measuring a degree of polarization of the polarizing element layer by an absolute polarization method using a spectrophotometer, the degree of polarization was 98.2%.

An optical film, an optical laminate, and polarized sunglasses were obtained in the same operation as in Example 1 except for using the light reflective layer and the polarizing element layer.

### [Example 3]

### <Production of Light Reflective Layer>

A light reflective layer used in the present invention was obtained in the same operation as in Example 1, except that each of the prepared coating liquids (R3) and (L3) was used and applied so that a thickness of the light reflective layer after coating and drying was 1.5 µm. Both the central reflection wavelengths of the cholesteric liquid crystal layer (R3) and the cholesteric liquid crystal layer (L3) were 680 nm.

### <Production of Polarizing Element Layer>

Polyvinyl alcohol (manufactured by Kuraray Co., Ltd., trade name: KURARAY VINYLON #750) was dyed in an aqueous solution containing 0.38 g/L of chlorantine fast red (C.I. 28160), 0.16 g/L of chrysophenine (C.I. 24895), 0.32 g/L of solophenyl blue 4GL (C.I. 34200), and 10 g/L of sodium sulfate at 35°C for 3 minutes, and then, 4-fold stretching was performed in the solution. Then, the dyed sheet was immersed in an aqueous solution containing 2.5 g/L of nickel acetate and 6.6 g/L of boric acid at 35°C for 3 minutes. Then, the sheet was dried at room temperature for 3 minutes while the tension state was maintained, and then, the dried sheet was subjected to a heating treatment at 70°C for 3 minutes, thereby obtaining a polarizing element layer. As a result of measuring a degree of polarization of the polarizing element layer by an absolute polarization method using a spectrophotometer, the degree of polarization was 99.8%.

An optical film, an optical laminate, and polarized sunglasses were obtained in the same operation as in Example 1 except for using the light reflective layer and the polarizing element layer.

### [Example 4]

An optical film, an optical laminate, and polarized sunglasses were obtained in the same operation as in Example 3, except that the application was performed so that the thickness of the light reflective layer described in Example 3 was 2.4 µm.

### [Example 5]

### <Production of Light Reflective Layer>

A light reflective layer used in the present invention was obtained in the same operation as in Example 1, except that each of the prepared coating liquids (R4) and (L4) was used and applied so that a thickness of the light reflective layer after coating and drying was 1.0 µm. The central reflection wavelengths of the cholesteric liquid crystal layer (R4) and the cholesteric liquid crystal layer (L4) were 485 nm and 475 nm, respectively.

### <Production of Polarizing Element Layer>

Polyvinyl alcohol (manufactured by Kuraray Co., Ltd., trade name: KURARAY VINYLON #750) was dyed in an aqueous solution containing 0.18 g/L of chlorantine fast red (C.I. 28160), 0.52 g/L of solophenyl blue 4GL (C.I. 34200), and 10 g/L of sodium sulfate at 35°C for 3 minutes, and then, 4-fold stretching was performed in the solution. Then, the dyed sheet was immersed in an aqueous solution containing 2.5 g/L of nickel acetate and 6.6 g/L of boric acid at 35°C for 3 minutes. Then, the sheet was dried at room temperature for 3 minutes while the tension state was maintained, and then, the dried sheet was subjected to a heating treatment at 70°C for 3 minutes, thereby obtaining a polarizing element layer. As a result of measuring a degree of polarization of the polarizing element layer by an absolute polarization method using a spectrophotometer, the degree of polarization was 99.8%.

An optical film, an optical laminate, and polarized sunglasses were obtained in the same operation as in Example 1 except for using the light reflective layer and the polarizing element layer.

### [Example 6]

### <Production of Light Reflective Layer>

A light reflective layer used in the present invention was obtained in the same operation as in Example 1, except that each of the prepared coating liquids (R5) and (L5) was used and applied so that a thickness of the light reflective layer after coating and drying was 1.0 µm. The central reflection wavelengths of the cholesteric liquid crystal layer (R5) and the cholesteric liquid crystal layer (L5) were 455 nm and 445 nm, respectively.

### <Production of Polarizing Element Layer>

The polarizing element layer described in Example 5 was used.

An optical film, an optical laminate, and polarized sunglasses were obtained in the same operation as in Example 1 except for using the light reflective layer and the polarizing element layer.

### [Example 7]

### <Production of Light Reflective Layer>

A light reflective layer used in the present invention was obtained in the same operation as in Example 1, except that each of the prepared coating liquids (R6) and (L6) was used and applied so that a thickness of the light reflective layer after coating and drying was 0.7 µm. Both the central reflection wavelengths of the cholesteric liquid crystal layer (R6) and the cholesteric liquid crystal layer (L6) were 605 nm.

### <Production of Polarizing Element Layer>

Polyvinyl alcohol (manufactured by Kuraray Co., Ltd., VF series) was immersed in warm water at 40 °C for 3 minutes to be swollen. The swelling-treated film was immersed in an aqueous solution at 30°C containing 2.8 wt% of boric acid, 0.044 wt% of iodine, and 3.13 wt% of potassium iodide to perform a dyeing treatment, and the film dyed with a pigment was stretched 5.0 times and treated in an aqueous solution at 50°C containing 3.0 wt% of boric acid for 5 minutes. A complementary color treatment was performed for 20 seconds with an aqueous solution at 30°C containing 5.0 wt% of potassium iodide while maintaining the tension state of the film obtained by the boric acid treatment. The film obtained by the treatment was immediately dried at 70°C for 9 minutes to obtain a polarizing element layer. As a result of measuring a degree of polarization of the polarizing element layer by an absolute polarization method using a spectrophotometer, the degree of polarization was 99.9%.

An optical film, an optical laminate, and polarized sunglasses were obtained in the same operation as in Example 1 except for using the light reflective layer and the polarizing element layer produced as described above.

### [Example 8]

An optical film, an optical laminate, and polarized sunglasses were obtained in the same operation as in Example 7 except for using the light reflective layer described in Example 2.

### [Example 9]

An optical film, an optical laminate, and polarized sunglasses were obtained in the same operation as in Example 7 except for using the light reflective layer described in Example 3.

### [Example 10]

An optical film, an optical laminate, and polarized sunglasses were obtained in the same operation as in Example 7 except for using the light reflective layer described in Example 5.

### [Example 11]

An optical film, an optical laminate, and polarized sunglasses were obtained in the same operation as in Example 7 except for using the light reflective layer described in Example 6.

### [Example 12]

### <Production of Light Reflective Layer>

One light reflective layer was produced using the prepared coating liquid (R6) by the following procedure. As a plastic substrate, a PET film (without an undercoat layer) manufactured by Toyobo Co., Ltd. was used. (1) The coating liquid was applied onto the PET film at room temperature using a wire bar so that a thickness of the film after drying was 1.0 µm. (2) Heating was performed at 150°C for 5 minutes to remove the solvent and obtain a cholesteric liquid crystal phase. Next, UV irradiation was performed with a high-pressure mercury lamp (manufactured by HARISON TOSHIBA LIGHTING Corporation) at an output of 120 W for 5 to 10 seconds to fix the cholesteric liquid crystal phase, thereby obtaining a cholesteric liquid crystal layer (R6). (3) The PET film was peeled off to obtain a light reflective layer comprising the cholesteric liquid crystal layer (R6). The central reflection wavelength of the cholesteric liquid crystal layer (R6) was 605 nm.

An optical film, an optical laminate, and polarized sunglasses were obtained in the same operation as in Example 7 except for using the light reflective layer thus obtained.

### [Comparative Example 1]

An optical film, an optical laminate, and polarized sunglasses were obtained in the same operation as in Example 7, except that the application was performed so that the thickness of each of the cholesteric liquid crystal layer (R) and the cholesteric liquid crystal layer (L) described in Example 1 was 2.0 µm.

### [Comparative Example 2]

An optical film, an optical laminate, and polarized sunglasses were obtained in the same operation as in Example 7, except that the application was performed so that the thickness of each of the cholesteric liquid crystal layer (R) and the cholesteric liquid crystal layer (L) described in Example 2 was 1.8 µm.

### [Comparative Example 3]

An optical film, an optical laminate, and polarized sunglasses were obtained in the same operation as in Example 7 except for using the light reflective layer described in Example 4.

### [Comparative Example 4]

An optical film, an optical laminate, and polarized sunglasses were obtained in the same operation as in Example 7, except that the application was performed so that the thickness of each of the cholesteric liquid crystal layer (R) and the cholesteric liquid crystal layer (L) described in Example 5 was 1.8 µm.

### [Comparative Example 5]

An optical film, an optical laminate, and polarized sunglasses were obtained in the same operation as in Example 7, except that the application was performed so that the thickness of each of the cholesteric liquid crystal layer (R) and the cholesteric liquid crystal layer (L) described in Example 6 was 1.8 µm.

### [Evaluation of Characteristics]

### <Central Reflection Wavelength and Minimum Transmittance of Light Reflective Layer>

A transmittance of the obtained light reflective layer was measured using a spectrophotometer UV-3600 manufactured by Shimadzu Corporation. A C light source was used as a light source. An intermediate value between wavelengths on a short wavelength side and a long wavelength side of spectral transmittance in the reflection region of the obtained light reflective layer at which a transmittance was 75% was defined as a central reflection wavelength [nm].

In addition, the minimum value of the transmittance in the central reflection wavelength region, that is, the minimum value of the transmittance within the reflection region was defined as a minimum transmittance [%].

### <Product of Transmittance of Polarizing Element Layer and Light Reflective Layer>

A transmittance of the obtained polarizing element layer was measured using a spectrophotometer UV-3600 manufactured by Shimadzu Corporation. A C light source was used as a light source. T0 (%) was calculated from a product of the minimum transmittance of the light reflective layer and the transmittance of the polarizing element layer in the central reflection wavelength of the light reflective layer. An average value of the product of the transmittance of the light reflective layer and the transmittance of the polarizing element layer in the central reflection wavelength region of the light reflective layer was defined as T1%, and an average value of the product of the transmittance of the light reflective layer and the transmittance of the polarizing element layer in the wavelength region excluding the central reflection wavelength region in a visible light region of 400 to 750 nm was defined as T2%.

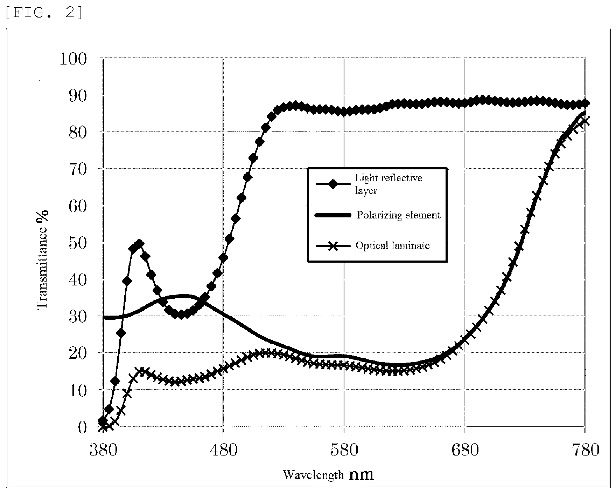

In addition, a transmittance of each of the optical reflective layer, the polarizing element layer, and the optical laminate obtained in Example 6 was measured using a spectrophotometer UV-3600 (C light source) manufactured by Shimadzu Corporation. The results are illustrated in Fig. 2.

### <Degree of Polarization of Optical Film>

A degree of polarization of the obtained optical film was measured using a spectrophotometer UV-3600 manufactured by Shimadzu Corporation. A C light source was used as a light source. An absolute polarization method was used as a measurement method, and a polarizing plate having a degree of polarization of 99.99% was used. The degree of polarization was calculated by a calculation formula of Degree of polarization = {(Tp - Tc)/(Tp + Tc)} × 100, in which Tp [%] was a transmittance measured by setting an absorption axis of the polarizing plate having a degree of polarization of 99.99% and an absorption axis of the polarized sunglasses in parallel, and Tc [%] was a transmittance set by an orthogonal difference.

### <Average Visible Light Transmittance and Transmission Hue of Optical Film>

A transmittance of the obtained optical film was measured using a spectrophotometer UV-3600 manufactured by Shimadzu Corporation. A C light source was used as a light source. A Y value, which was a tristimulus value, was calculated using the numerical value of the obtained transmittance in accordance with JIS Z 8722:2009, and the Y value was defined as an average visible light transmittance.

Using the transmittance of the obtained optical film, each of an a* value and a b* value in an L*a*b* color system was calculated in accordance with JIS Z 8781-4:2013.

### <Evaluation of Conformity of Polarized Sunglasses to Signal Visibility Standards>

A transmittance of the obtained polarized sunglasses was measured using a spectrophotometer UV-3600 manufactured by Shimadzu Corporation. A C light source and a D65 light source were used as light sources. Using the obtained transmittance, signal visibility standards shown in Tables 1 to 3 and illustrated in Fig. 1 were calculated in accordance with ISO 12312-1:2013, ANSI Z80.3:2010, and AS/NZS 1067:2003. The evaluation results are as follows.
∘: Conforming to all items
×: Presence of nonconforming item

The characteristics were evaluated using the optical reflective layers, the optical films, and the polarized sunglasses described in Examples 1 to 12 and Comparative Examples 1 to 5. The evaluation results are shown in Tables 6 to 8.

**[Table 6]**

| Item | Example 1 | Example 2 | Example 3 | Example 4 | Example 5 | Example 6 |
|---|---|---|---|---|---|---|
| Central reflection wavelength [nm] | 620 | 559 | 681 | 680 | 479 | 452 |
| Minimum | 45 | 46 | 35 | 21 | 35 | 33 |
| transmittance [%] | | | | | | |
| Degree of polarization [%] | 92.6 | 95.6 | 97.8 | 97.3 | 97.6 | 98.3 |
| Average visible light transmittance [%] | 15.4 | 15.5 | 16.6 | 15.2 | 16.8 | 17.4 |
| a*[%] | 4 | 0.1 | 2.1 | -2.4 | 4.1 | -8.4 |
| b* [%] | -2.8 | 3.8 | 2.7 | -2.7 | 0.2 | 8.2 |
| T0 [%] | 17 | 12 | 10 | 7 | 11 | 11 |
| T1 [%] | 17 | 14 | 23 | 20 | 18 | 14 |
| T2 [%] | 25 | 24 | 17 | 16 | 22 | 23 |
| T2-T1 | 8 | 10 | -6 | -4 | 5 | 9 |
| Signal visibility standard conformity | ○ | ○ | ○ | ○ | ○ | ○ |

**[Table 7]**

| Item | Example 7 | Example 8 | Example 9 | Example 10 | Example 11 | Example 12 |
|---|---|---|---|---|---|---|
| Central reflection wavelength [nm] | 605 | 559 | 681 | 479 | 452 | 605 |
| Minimum transmittance [%] | 60 | 46 | 35 | 35 | 33 | 65 |
| Degree of polarization [%] | 97.2 | 94.2 | 98.7 | 96.7 | 98.1 | 91.6 |
| Average visible light transmittance [%] | 32.7 | 25.1 | 37.3 | 32.2 | 34.9 | 35.4 |
| a* [%] | -8.5 | 7.7 | -8.4 | 6.2 | -6.1 | -7.4 |
| b* [%] | -2.2 | -14.3 | 2.1 | 17.6 | 31.1 | 1.5 |
| Signal visibility standard conformity | ○ | ○ | ○ | ○ | ○ | ○ |

**[Table 8]**

| Item | Comparative Example 1 | Comparative Example 2 | Comparative Example 3 | Comparative Example 4 | Comparative Example 5 |
|---|---|---|---|---|---|
| Central reflection wavelength [nm] | 630 | 559 | 681 | 481 | 458 |
| Minimum transmittance [%] | 20 | 13 | 20 | 10 | 9 |
| Degree of polarization [%] | 96.1 | 88.9 | 98.2 | 94.2 | 95.6 |
| Average visible light transmittance [%] | 28.9 | 16.3 | 37.7 | 28.0 | 32.8 |
| a* [%] | -25.6 | 36.2 | -13.6 | 15.7 | -4.5 |
| b* [%] | -8.7 | -28.7 | 0.2 | 16.6 | 42.2 |
| Signal visibility standard conformity | × | × | × | × | × |

As shown in the above results, comparing Examples 1 to 12 with Comparative Examples 1 to 5, the polarized sunglasses of Examples 1 to 12 conformed to all three the signal visibility standards, whereas the polarized sunglasses of Comparative Examples 1 to 5 did not conform thereto. Specifically, in Examples 1 to 5, it was found that the transmission hue was not limited by the reflection region of the light reflective layer and was within a region of -5 ≤ a* ≤ 5 and -5 ≤ b* ≤ 5, and conformed to the signal visibility standards. In addition, in Examples 6 to 11, it was found that the transmission hue of the optical film was within the transmission hue region set for each reflection region of the light reflective layer, and conformed to the signal visibility standards. On the other hand, in Comparative Examples 1 to 5, it was found that the transmission hue was outside the region of the transmission hue set for each reflection wavelength region, the minimum transmittance within the central reflection region of the light reflective layer was low, and the signal visibility standards were unacceptable.

### Industrial Applicability

When the optical film or the optical laminate of the present invention is used, it is possible to provide an eyewear such as polarized sunglasses or a goggle helmet visor having an excellent polarization performance while imparting a metallic color tone conforming to signal visibility standards of various countries.

## Claims

1. An optical film obtained by laminating a light reflective layer and a polarizing element layer, wherein the optical film satisfies one or more of the following (a) to (d) :
(a) a central reflection wavelength of the light reflective layer is 600 nm or more and less than 660 nm, and a transmission hue of the optical film is within a region of -15 ≤ a* ≤ 10 and -20 ≤ b* ≤ 20,
(b) a central reflection wavelength of the light reflective layer is 500 nm or more and less than 600 nm, and a transmission hue of the optical film is within a region of -5 ≤ a* ≤ 20 and -20 ≤ b* ≤ 30,
(c) a central reflection wavelength of the light reflective layer is 660 nm or more and less than 750 nm, and a transmission hue of the optical film is within a region of -10 ≤ a* ≤ 10 and -5 ≤ b* ≤ 35, and
(d) a central reflection wavelength of the light reflective layer is 400 nm or more and less than 500 nm, a minimum transmittance of the light reflective layer at 400 nm or more and less than 500 nm is 15% or more, and a transmission hue of the optical film is within a region of -15 ≤ a* ≤ 25 and -10 ≤ b* ≤ 40,
wherein the central reflection wavelength is an intermediate value between wavelengths on a short wavelength side and a long wavelength side at which a transmittance in the reflection region is 75% in spectroscopic measurement and wherein each of the a* value and the b* value is calculated in accordance with JIS Z 8781-4:2013 when a C light source or a D65 light source as light sources are used, and **characterized in that** a product (T0%) of the minimum transmittance of the light reflective layer and the transmittance of the polarizing element layer in the central reflection wavelength of the light reflective layer is 5% or more with respect to the light reflective layer that reflects a desired wavelength and
a difference (T2-T1) between an average value (T1%) of the product of the transmittance of the light reflective layer and the transmittance of the polarizing element layer in the central reflection wavelength region of the light reflective layer and an average value (T2%) of the product of the transmittance of the light reflective layer and the transmittance of the polarizing element layer in the wavelength region excluding the central reflection wavelength region in a visible light region of 400 to 750 nm satisfies -10 or more and 20 or less.

2. The optical film according to claim 1, wherein the light reflective layer comprises one or more cholesteric liquid crystal layers.

3. The optical film according to claim 1 or 2, wherein the light reflective layer has a cholesteric liquid crystal layer R having a right-handed helical orientation and a cholesteric liquid crystal layer L having a left-handed helical orientation.

4. The optical film according to any one of claims 1 to 3, wherein the polarizing element layer is formed of a stretched polymer film containing a dichroic pigment.

5. The optical film according to any one of claims 1 to 4, wherein the optical film satisfies standards for traffic signal visibility specified in ISO 12312-1:2013, ANSI Z80.3:2010, and/or AS/NZS 1067:2003.

6. An optical laminate in which the optical film according to any one of claims 1 to 5 is disposed between a first support and a second support.

7. The optical laminate according to claim 6, wherein the first and second supports are polycarbonate.

8. An eyewear comprising the optical film according to any one of claims 1 to 5 or the optical laminate according to claim 6 or 7.

## Patentansprüche

1. Optischer Film, erhalten durch Laminieren einer lichtreflektierenden Schicht und einer Polarisatorelementschicht, wobei der optische Film eine oder mehrere der folgenden (a) bis (d) erfüllt:
(a) eine zentrale Reflexionswellenlänge der lichtreflektierenden Schicht ist 600 nm oder mehr und weniger als 660 nm, und ein Transmissionsfarbton des optischen Films liegt innerhalb eines Bereichs von -15 ≤ a* ≤ 10 und -20 ≤ b* ≤ 20,
(b) eine zentrale Reflexionswellenlänge der lichtreflektierenden Schicht ist 500 nm oder mehr und weniger als 600 nm, und ein Transmissionsfarbton des optischen Films liegt innerhalb eines Bereichs von -5 ≤ a* ≤ 20 und -20 ≤ b* ≤ 30,
(c) eine zentrale Reflexionswellenlänge der lichtreflektierenden Schicht ist 660 nm oder mehr und weniger als 750 nm, und ein Transmissionsfarbton des optischen Films liegt innerhalb eines Bereichs von -10 ≤ a* ≤ 10 und -5 ≤ b* ≤ 35, und
(d) eine zentrale Reflexionswellenlänge der lichtreflektierenden Schicht ist 400 nm oder mehr und weniger als 500 nm, ein Mindesttransmissionsgrad der lichtreflektierenden Schicht bei 400 nm oder mehr und weniger als 500 nm ist 15 % oder mehr, und ein Transmissionsfarbton des optischen Films liegt innerhalb eines Bereichs von -15 ≤ a* ≤ 25 und -10 ≤ b* ≤ 40,
wobei die zentrale Reflexionswellenlänge ein Zwischenwert zwischen Wellenlängen auf einer kurzwelligen Seite und einer langwelligen Seite ist, bei denen der Transmissionsgrad im Reflexionsbereich in einer spektroskopischen Messung 75 % beträgt, und wobei jeder der a*-Wert und der b*-Wert in Übereinstimmung mit JIS Z 8781-4:2013 berechnet wird, wenn eine Normlichtart C oder eine Normlichtart D65 als Lichtquellen verwendet werden, und **dadurch gekennzeichnet, dass** ein Produkt (TO%) aus dem Mindesttransmissionsgrad der lichtreflektierenden Schicht und dem Transmissionsgrad der Polarisatorelementschicht bei der zentralen Reflexionswellenlänge der lichtreflektierenden Schicht 5 % oder mehr in Bezug auf die lichtreflektierende Schicht, die eine gewünschte Wellenlänge reflektiert, ist, und
eine Differenz (T2-T1) zwischen einem Mittelwert (T1%) des Produkts aus dem Transmissionsgrad der lichtreflektierenden Schicht und dem Transmissionsgrad der Polarisatorelementschicht im zentralen Reflexionswellenlängenbereich der lichtreflektierenden Schicht und einem Mittelwert (T2%) des Produkts aus dem Transmissionsgrad der lichtreflektierenden Schicht und dem Transmissionsgrad der Polarisatorelementschicht im Wellenlängenbereich unter Ausschluss des zentralen Reflexionswellenlängenbereichs in einem sichtbaren Wellenlängenbereich von 400 bis 750 nm -10 oder mehr und 20 oder weniger erfüllt.

2. Optischer Film nach Anspruch 1, wobei die lichtreflektierende Schicht eine oder mehrere cholesterische Flüssigkristallschichten umfasst.

3. Optischer Film nach Anspruch 1 oder 2, wobei die lichtreflektierende Schicht eine cholesterische Flüssigkristallschicht R aufweist, die eine rechtsgängige helikale Orientierung aufweist, und eine cholesterische Flüssigkristallschicht L aufweist, die eine linksgängige helikale Orientierung aufweist.

4. Optischer Film nach einem der Ansprüche 1 bis 3, wobei die Polarisatorelementschicht aus einer gereckten Polymerfolie gebildet ist, die ein dichroitisches Pigment enthält.

5. Optischer Film nach einem der Ansprüche 1 bis 4, wobei der optische Film Normen für die Sichtbarkeit von Verkehrsampelsignalen erfüllt, die in ISO 12312-1:2013, ANSI Z80.3:2010, und/oder AS/NZS 1067:2003 festgelegt sind.

6. Optisches Laminat, in dem der optische Film nach einem der Ansprüche 1 bis 5 zwischen einem ersten Träger und einem zweiten Träger angeordnet ist.

7. Optisches Laminat nach Anspruch 6, wobei der erste und der zweite Träger Polycarbonat sind.

8. Brille, umfassend den optischen Film nach einem der Ansprüche 1 bis 5 oder das optische Laminat nach Anspruch 6 oder 7.

## Revendications

1. Film optique obtenu par la stratification d'une couche réfléchissant la lumière et d'une couche d'élément de polarisation, dans lequel le film optique satisfait une ou plusieurs des conditions suivantes (a) à (d) :
(a) une longueur d'onde de réflexion centrale de la couche réfléchissant la lumière est de 600 nm ou plus et inférieure à 660 nm, et une teinte de transmission du film optique s'inscrit dans une région de -15 ≤ a* ≤ 10 et -20 ≤ b* ≤ 20,
(b) une longueur d'onde de réflexion centrale de la couche réfléchissant la lumière est de 500 nm ou plus et inférieure à 600 nm, et une teinte de transmission du film optique s'inscrit dans une région de -5 ≤ a* ≤ 20 et -20 ≤ b* ≤ 30,
(c) une longueur d'onde de réflexion centrale de la couche réfléchissant la lumière est de 660 nm ou plus et inférieure à 750 nm, et une teinte de transmission du film optique s'inscrit dans une région de -10 ≤ a* ≤ 10 et -5 ≤ b* ≤ 35, et
(d) une longueur d'onde de réflexion centrale de la couche réfléchissant la lumière est de 400 nm ou plus et inférieure à 500 nm, une transmittance minimale de la couche réfléchissant la lumière à 400 nm ou plus et à moins de 500 nm est de 15 % ou plus, et une teinte de transmission du film optique s'inscrit dans une région de -15 ≤ a* ≤ 25 et -10 ≤ b* ≤ 40,
dans lequel la longueur d'onde de réflexion centrale est une valeur intermédiaire entre des longueurs d'onde sur un côté de longueur d'onde courte et un côté de longueur d'onde longue au niveau desquels une transmittance dans la région de réflexion est de 75 % en mesure spectroscopique et dans lequel chacune parmi la valeur a* et la valeur b* est calculée conformément à JIS Z 8781-4:2013 lorsqu'une source lumineuse C ou une source lumineuse D65 en tant que source lumineuse est utilisée, et **caractérisé en ce qu'**un produit (T0%) de la transmittance minimale de la couche réfléchissant la lumière et de la transmittance de la couche d'élément de polarisation dans la longueur d'onde de réflexion centrale de la couche réfléchissant la lumière est de 5 % ou plus par rapport à la couche réfléchissant la lumière qui réfléchit une longueur d'onde souhaitée et,
une différence (T2-T1) entre une valeur moyenne (T1%) du produit de la transmittance de la couche réfléchissant la lumière et de la transmittance de la couche d'élément de polarisation dans la région de longueur d'onde de réflexion centrale de la couche réfléchissant la lumière et une valeur moyenne (T2%) du produit de la transmittance de la couche réfléchissant la lumière et de la transmittance de la couche d'élément de polarisation dans la région de longueur d'onde excluant la région de longueur d'onde de réflexion centrale dans une région de lumière visible de 400 à 750 nm satisfait -10 ou plus et 20 ou moins.

2. Film optique selon la revendication 1, dans lequel la couche réfléchissant la lumière comprend un ou plusieurs couches de cristaux liquides cholestériques.

3. Film optique selon la revendication 1 ou la revendication 2, dans lequel la couche réfléchissant la lumière présente une couche de cristaux liquides cholestériques R présentant une orientation hélicoïdale de sens droit et une couche de cristaux liquides cholestériques L présentant une orientation hélicoïdale de sens gauche.

4. Film optique selon la revendication 1 à 3, dans lequel la couche d'élément de polarisation est formée d'un film polymère étiré contenant un pigment dichroïque.

5. Film optique selon l'une quelconque des revendications 1 à 4, dans lequel le film optique satisfait des normes de visibilité de feux de signalisation routière spécifiées dans ISO 12312-1:2013, ANSI Z80.3:2010, et/ou AS/NZS 1067:2003.

6. Stratifié optique dans lequel le film optique selon l'une quelconque des revendications 1 à 5 est disposé entre un premier support et un deuxième support.

7. Stratifié optique selon la revendication 6, dans lequel le premier support et le deuxième support sont en polycarbonate.

8. Lunettes comprenant le film optique selon l'une quelconque des revendications 1 à 5 ou le stratifié optique selon la revendication 6 ou 7.
